# EUROPEAN PATENT SPECIFICATION

(11) **EP 1 873 843 B1**
(45) Date of publication and mention of the grant of the patent: **19.05.2010**
(21) Application number: 07110960.7
(22) Date of filing: 25.06.2007
(51) Int. Cl.: H01L 31/058

(54) **Photovoltaic plant**
Photovoltaische Anlage
Installation photovoltaïque

(30) Priority: 26.06.2006 IT UD20060163
(43) Date of publication of application: 02.01.2008
(73) Proprietor: Fototherm S.r.l., 33030 Gonars (UD) (IT)
(72) Inventor: Buiani, Stefano, 33030, Talmassons (UD) (IT); Miani, Eros, 33030, Gonars (UD) (IT)
(74) Representative: Petraz, Gilberto Luigi

(56) References cited:
- DE-A1- 19 902 650
- GB-A- 2 384 113
- US-A- 4 186 033
- BROGREN M ET AL: "Low-concentrating water-cooled PV-thermal hybrid systems for high latitudes" CONFERENCE RECORD OF THE 29TH IEEE PHOTOVOLTAIC SPECIALISTS CONFERENCE, vol. CONF. 29, 19 May 2002 (2002-05-19), pages 1733-1736, XP010666624 ISBN: 0-7803-7471-1
- ZAKHARCHENKO R ET AL: "Photovoltaic solar panel for a hybrid PV/thermal system" SOLAR ENERGY MATERIALS AND SOLAR CELLS, ELSEVIER SCIENCE PUBLISHERS, AMSTERDAM, NL, vol. 82, no. 1-2, 1 May 2004 (2004-05-01), pages 253-261, XP004503285 ISSN: 0927-0248

## Description

### FIELD OF THE INVENTION

The present invention concerns a photovoltaic plant provided with at least a photovoltaic panel to convert solar radiance energy into electric and heat energy. In particular, the plant according to the present invention is applied preferably, but not exclusively, to installations on residential or tertiary buildings, or for installations on the ground, in order to supply electric energy, and in addition, possibly, heat energy for the production of hot water, process heat, and/or for heat conditioning of internal environments.

### BACKGROUND OF THE INVENTION

Photovoltaic plants are known, substantially consisting of a plurality of crystalline (polycrystalline and monocrystalline silicon) or amorphous (amorphous thin film silicon) photovoltaic panels, able to transform solar radiance energy into electric energy.

Solar heating plants are known, consisting substantially of a dark metal surface able to absorb solar radiation, able to transform the radiance energy into heat energy transported by a thermovector fluid.

Known photovoltaic plants provide, by means of specific apparatuses associated with them, such as boilers, heat convectors or other, to provide electric energy in order to produce hot water and/or to integrate the heat conditioning of the buildings, as well as to supply electric energy for the various electric users in the building and the plants.

Known solar heating plants provide, by means of specific apparatuses associated with them, such as boilers, accumulators, heat convectors or other, to use the heat energy generated for the production of hot water and/or to integrate the heating and conditioning of the buildings.

A first disadvantage of known plants is that they use the incident solar energy for the direct production of heat energy only, or electric energy only, without fully satisfying all the energy needs of a domestic or tertiary user.

Known photovoltaic panels have a declared conversion efficiency that varies, today, from about 5% to about 25% with respect to the overall quantity of solar radiations received, depending on the materials and technologies present in the panel. In reality, commercially available photovoltaic panels manage to convert into electric energy not more than 18% of the solar energy incident upon them.

This efficiency of the panels is normally detected in standard transformation conditions (STC) measured at an ideal temperature of about 25°C.

However, these photovoltaic panels in practice have disadvantages due to losses in efficiency during the transformation of the energy inasmuch as, due to the physics of photovoltaic conversion, the part of incident solar radiation not transformed into electric energy, that is, about 80-90%, causes an increase in the temperature of the photovoltaic panels themselves, which in fact have to work at real working temperatures that vary, according to the solar period, from about 40°C to about 120°C.

However, these real working temperatures entail losses of nominal power, quantifiable in a decrease in yield of between about 0.30% and about 0.60% for every degree of deviation from the ideal temperature of 25°C.

The documents DE 199 02 650 and US-A-4186033 disclose photovoltaic plants combining photovoltaic and thermal solar parts.

It has been verified, in fact, that in the space of a solar year, the decrease in energy produced with respect to the maximum amount producible with reference to the standard transformation conditions STC, is about 12-40%.

One purpose of the present invention is to achieve a photovoltaic plant which is able to use effectively the solar energy incident on its panels in order to supply both electric energy and also heat energy for industrial uses, for heating and for conditioning.

Another purpose of the present invention is to achieve a photovoltaic plant which, under real working conditions, has an improved yield with respect to known plants.

Another purpose of the present invention is to find a technological solution that is applicable to all commercial photovoltaic modules, both crystalline, and also those with thin films in the CdTe (cadmium telluride) and CIS (copper indium diselenide) versions.

Another purpose of the present invention is to allow to improve the photovoltaic modules already in existence, in terms of electric yield, integrating the function of heat disposal or heat recovery and taking up the same space dedicated to a traditional photovoltaic plant.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a photovoltaic plant according to the present invention comprises photovoltaic means, such as for example one or more panels with photovoltaic cells, having an external surface able to be exposed to the rays of the sun in order to receive the relative solar radiance energy and to convert at least a part of such energy into electric energy.

The plant according to the present invention also comprises a means to recover the heat energy, associated with said photovoltaic means, which is able to recover at least a part of the radiance energy received, and not converted by the photovoltaic means into electric energy. As is known, the photovoltaic means converts into electric energy only a relatively low part (about 10%-20%) of the radiance energy received from the sun on the external surface of the panel, while the remaining part entails the generation of a determinate quantity of heat on the surface itself, with a consequent overheating of the photovoltaic means.

According to a characteristic feature of the present invention, an interface means is interposed between the photovoltaic means and the heat energy recovery means, in order to optimize the heat conduction between the photovoltaic means and the heat energy recovery means. Advantageously the interface means comprises at least a first layer of heat conductor material.

The heat conductor material has an acrylic based chemical composition and advantageously is charged with TiO₂ graphite, SiC and Al₂O₃ in order to have good heat conductor characteristics.

Advantageously, the heat conductor material is bi-adhesive, so that it can adhere both to the photovoltaic means and also to the heat energy recovery means.

The heat conductor material must function as a good electric insulation so as to be able to put into contact photovoltaic means with high working tensions and heat exchangers located in equipotential tension (earth).

With the present invention it is therefore possible on the one hand to recover the heat that develops on the surface of the photovoltaic means so as to supply heat energy usable for heating, conditioning and normal use, and on the other hand to generate directly the electric energy transformed by the photovoltaic means with a conversion efficiency improved by 0-40%, according to operating conditions.

In this way, given the same surface of the photovoltaic plant, we have the simultaneous supply both of heat energy and also of electric energy.

Applicant has found that with the present invention there is an increase in efficiency in the photovoltaic transformation of the incident energy, with an increase of up to 40% of the electric energy produced annually, depending on the environmental conditions of the installation and on the latitude, with respect to a photovoltaic plant of a known type.

Moreover, when the heat energy absorbed by the heat energy recovery means is taken into consideration too, the present invention achieves a combined reception efficiency, with respect to the overall electric and heat energy, which is about 90-95% of the solar radiance energy received by the surface of the photovoltaic means.

In this way, by adding the heat energy recovered by the photovoltaic plant according to the present invention, it is possible to satisfy the annual energy requirements of a residential building both during the winter and also during the summer.

Therefore, apart from the double and simultaneous supply of heat and electric energy, the photovoltaic plant according to the present invention also has an increase in its energy transformation yield, since the heat energy recovery means, absorbing heat from the surface of the photovoltaic means, reduces the real working temperature of the latter, and brings it as near as possible to the ideal transformation temperature (STC), approved by the manufacturers in normalized laboratory conditions.

In fact, it has been seen that with the present invention the electric transformation efficiency of the photovoltaic means can be returned to the nominal value measured in STC conditions.

The solution according to the present invention is usable equally advantageously both on photovoltaic means already installed, and also on photovoltaic means to be installed.

Moreover, having solved the technical problems present in the state of the art, the present invention allows to use photovoltaic elements both of the traditional type and also those of new invention, and allows to obtain the following results, which could not have been foreseen beforehand:
- it guarantees the integrity of the panel for a duration of 25 years with a maximum decrease in performance of 20%, according to the European guarantee as currently provided by the manufacturers;
- it guarantees the dielectric rigidity between the photovoltaic cells, which are obviously part of an electrical circuit, and the masses of the system (exchangers and circulating liquids), necessarily located on the ground for reasons of electric safety;
- it allows the heat transfer between the heat exchanger and the photovoltaic cells, and also the necessary heat dilations to which the daily and seasonal trend of temperatures subjects the materials without their suffering wear.

### BRIEF DESCRIPTION OF THE DRAWINGS

These and other characteristics of the present invention will become apparent from the following description of some preferential forms of embodiment, given as a non-restrictive example with reference to the attached drawings wherein:
- - fig. 1: is a front view of a photovoltaic module according to the present invention;
- - fig. 2: is a rear view of the photovoltaic module in fig. 1;
- - fig. 3: shows an enlargement of a section from III to III of fig. 2, in a first form of embodiment;
- - fig. 4: shows an enlargement of a section from III to III of fig. 2, in a second form of embodiment;
- - fig. 5: shows an enlargement of a section from III to III of fig. 2, in a third form of embodiment;
- - fig. 6: shows an enlargement of a section from III to III of fig. 2, in a fourth form of embodiment.

### DETAILED DESCRIPTION OF SOME PREFERENTIAL FORMS OF EMBODIMENT

With reference to the attached drawings, a photovoltaic plant 10 according to the present invention is able to be installed on a surface exposed to the sun, for example on the ground, or a roof, a terrace or other, of a residential, tertiary or industrial building, so as to supply at the same time both electric energy and also heat energy for heating the water, process heat and/or conditioning of the temperature inside the building.

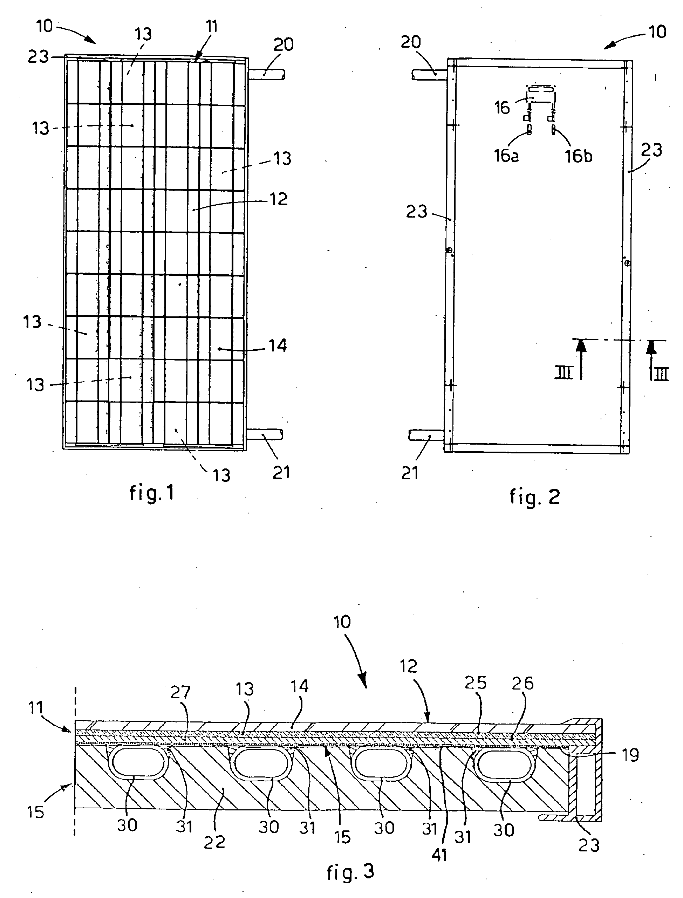

In particular, the photovoltaic plant 10 according to the invention comprises a panel 11 (fig. 1) having a determinate external surface 12 exposed to the sun, substantially rectangular in shape. The panel 11 essentially consists of a solar glass 14 (fig. 3) and a plurality of photovoltaic cells 13 (figs. 1 and 3), in fig. 1 thirty-six, able to receive the radiance energy emitted by the sun in order to transform it, according to intrinsic functioning percentages, or efficiency of the panel 11, into electric energy and heat energy.

Between the solar glass 14 (fig. 3) and the photovoltaic cells 13 a layer 25 of ethyl-vinyl-acetate (EVA) is disposed. Moreover, on the internal surface of the photovoltaic cells 13 another layer 26 of EVA is disposed. A further layer 27, made with a film based on polyvinyl fluoride, for example the one known under the commercial name TEDLAR®, is disposed on the layer 26.

With reference to fig. 2, on the bottom surface of the panel 11 an electric connection box 16 is provided, of a substantially known type, which by means of relative connectors 16a and 16b allows to feed an electric plant of the building/plant on which the photovoltaic plant 10 is installed.

The photovoltaic plant 10 also comprises a heat exchanger 15 (fig. 3) disposed below the panel 11, and able to absorb the heat normally generated by the latter, due to the effect of the non-transformation of the totality of the radiance energy received.

The solar panel 11 is able to transform into electric energy a percentage comprised between about 10% and about 18% of the radiance energy incident on the photovoltaic cells 13, while the remaining percentage (about 80%-90%) of the radiance energy is dissipated by the panel 11 in the form of heat.

The heat exchanger 15 (fig. 3) extends along the whole lower surface of the panel 11 and is separated from it by means of a layer 19 of heat conductor material which functions as an interface. The interface material is advantageously a bi-adhesive film, which allows easy laying and possible slippage due to heat dilation. The thickness of the bi-adhesive film is comprised between about 150 micron and about 300 micron, that is, such as to compensate the lack of uniformity in the co-planarity of the rear surface of the panels 11 and to maintain contact between the layer 27 and the heat exchanger 15 below. The layer 19, or bi-adhesive film, has an acrylic based chemical composition, in order to guarantee dielectric resistance (galvanic insulation), and is advantageously charged with TiO₂ graphite, SiC and Al₂O₃ in order to have good heat conductor characteristics.

Indeed it has been proved that the use of heat conductor adhesives of an epoxy type has the disadvantage that it causes the formation of micro-fractures on the rear layer 27 of the panels 11, caused over time by the cyclical dilations of the exchanger 15. Said micro-fractures negatively affect the galvanic insulation and hence the guarantee of efficiency and duration over time.

Therefore, the interface material is particularly important both to guarantee controlled temperatures on the internal side of the panel 11 (so-called photovoltaic module side), and also to reduce the ageing of the layers 25 and 26 of EVA used to protect the photovoltaic cells 13 in the production process of the panel 11. In fact, EVA is subject to accelerated photo-oxidation in the event of solar radiance combined with high temperatures. If such conditions persist, its transparency to light radiation is reduced, and the percentage of radiance absorbed in the spectrum of ultra-violet increases, thus making the electric performance of the panel 11 deteriorate, which therefore becomes deprived of a percentage part of photons.

In fact, without said layer 19, in equatorial and tropical conditions of use of photovoltaic technology, there is premature ageing of the modules due to the phenomenon described above. On the contrary, this behavior is cancelled with said interface material according to the present invention.

According to a first form of embodiment, according to the present invention, as shown in fig. 3, the heat exchanger 15 comprises a plurality of metal tubes 30, with an oval cross section, that is, diametrically flattened, in which a thermovector fluid is able to flow. The metal tubes 30, in this case, are made of copper, or stainless steel, for example AISI304, AISI316 or AISI316L and are made to adhere to a metal sheet 41, made of aluminum or stainless steel, for example AISI304, AISI316 or AISI316L. In turn, the metal sheet 41 is made to adhere to the bi-adhesive layer 19 by means of a heat conductive epoxy resin 31.

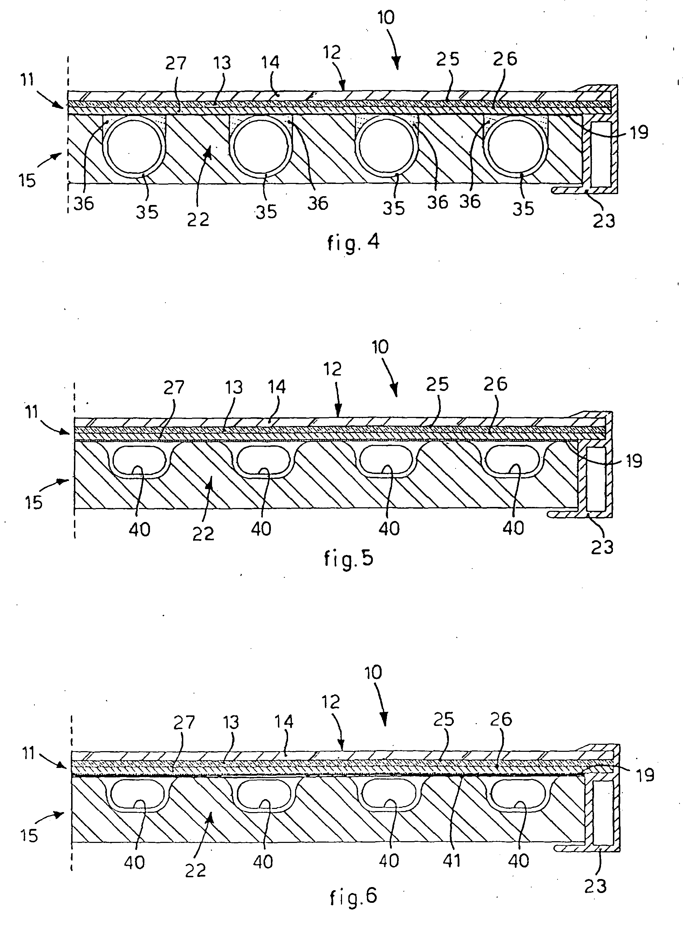

According to a second form of embodiment, according to the present invention, as shown in fig. 4, the heat exchanger 15 is made by coupling a plurality of metal tubes 35, with a circular cross section, in which the thermovector fluid is able to flow. The tubes 35, like the tubes 30, are made for example of copper, or stainless steel, for example AISI304, AISI316 or AISI316L, but, unlike the tubes 30 are accommodated in a shape or structure 36 made by molding a sheet of aluminum or stainless steel. The latter determines a heat conduction with the external surface of the corresponding metal tube 35 through a heat conductive epoxy resin, similar to the resin 31, located in the interstices.

According to a third form of embodiment, according to the present invention, as shown in fig. 5, the heat exchanger 15 is made entirely of molded polymer material, for example PVC, polypropylene, or polyethylene, but made conductive for example with graphite, carbon fibers, titanium oxide, Al₂O₃ and SiC. In particular, pipes 40 are made, in which the thermovector fluid is able to flow.

According to a fourth form of embodiment, according to the present invention, as shown in fig. 6, the lower part of the heat exchanger 15 is made of molded polymer material, similar to the solution shown in fig. 5 described above, that is, with pipes 40, for example of PVC, polypropylene, or polyethylene, made conductive, in which the thermovector fluid is able to flow, and the upper part is made with the metal sheet 41 glued to it.

The thermovector fluid is introduced into the tubes 30, 35 or the pipes 40 of the heat exchanger 15 through an inlet pipe 20 (figs. 1 and 2) at a first temperature, and exits from the heat exchanger 15 through an exit pipe 21 at a second temperature, higher than the first. The positioning of the pipes 20 and 21 may also be lateral (figs. 1 and 2) or rear (fig. 1).

The thermovector fluid that exits from the exit pipe 21 is advantageously introduced into a thermohydraulic circuit of the tertiary or industrial building on which the photovoltaic plant 10 is installed, so as to supply the heat energy necessary for domestic, process heat and conditioning requirements.

It is obvious that the heat exchanger 15 can equally be used only for the purpose of cooling the panel 11, without necessarily feeding a heat user.

The photovoltaic plant 10 may comprise an insulating layer 22 (figs. 2, 3, 4, 5 and 6), disposed around the heat exchanger 15, so as to limit to a minimum the accidental dispersions of heat that can occur.

In this case, the plant 10 comprises a frame 23 that keeps the panel 11, the heat conductor layer 19, the heat exchanger 15 and the possible insulating layer 22 all assembled together. The frame 23 is disposed on the perimeter of the components that it keeps assembled, and is also able to allow to attach the photovoltaic plant 10, for example by means of screws that are not shown here, to the relative surface exposed to the sun.

It is clear that modifications and/or additions of parts may be made to the photovoltaic plant 10 as described heretofore, without departing from the scope of the present invention.

It is also clear that, although the present invention has been described with reference to specific examples, a person of skill in the art shall certainly be able to achieve equivalent forms of photovoltaic plant, having the characteristics as set forth in the claims and hence all coming within the field of protection defined thereby.

## Claims

1. Photovoltaic plant comprising photovoltaic means (11) able to be exposed to the solar rays in order to receive the relative solar radiance energy and to convert at least a part of said radiance energy into electric energy, and means to recover the heat energy (15) associated with said photovoltaic means (11) in order to recover at least a part of said radiance energy not converted into electric energy by said photovoltaic means (11), wherein interface means is interposed between said photovoltaic means (11) and said heat energy recovery means (15) in order to optimize the heat conduction between said photovoltaic means (11) and said heat energy recovery means (15), and wherein said interface means comprises at least a first layer (19) of heat conductor material **characterized by** having an acrylic based chemical composition:

2. Photovoltaic plant as in claim 1, **characterized in that** said heat conductor material is bi-adhesive.

3. Photovoltaic plant as in claim 1 or 2, **characterized in that** said heat conductor material has a thickness comprises between about 150 micron and about 300 micron.

4. Photovoltaic plant as in any claim hereinbefore, **characterized in that** said heat conductor material is charged with TiO₂, graphite, SiC and Al₂O₃ in order to have good heat conductor characteristics.

5. Photovoltaic plant as in any claim hereinbefore, **characterized in that** said photovoltaic means comprises a plurality of photovoltaic cells (13) assembled on a panel (11) having a layer made of solar glass (14) with an external surface (12) able to be exposed to the sun's rays.

6. Photovoltaic plant as in claim 5, **characterized in that** between said solar glass (14) and said photovoltaic cells (13) a second layer (25) of ethyl-vinyl-acetate (EVA) is disposed, and **in that** on the internal surface of said photovoltaic cells (13) a third layer (26) of ethyl-vinyl-acetate (EVA) is disposed.

7. Photovoltaic plant as in claim 6, **characterized in that** a fourth layer (27), made with a polyvinyl fluoride based film, is disposed on said third layer (26).

8. Photovoltaic plant as in any claim hereinbefore, **characterized in that** said heat energy recovery means comprises a heat exchanger (15) disposed adjacent to said photovoltaic means (11).

9. Photovoltaic plant as in claim 8, **characterized in that** said heat exchanger (15) comprises a plurality of metal tubes (30, 35) which adhere to the metal sheet made of aluminum or stainless steel (41) by means of a heat conductive epoxy resin (31), and in which a thermovector fluid is able to flow.

10. Photovoltaic plant as in claim 9, **characterized in that** said metal tubes (30, 35) are made of copper or of stainless steel.

11. Photovoltaic plant as in claim 9 or 10, **characterized in that** said metal tubes (30) have an oval cross section.

12. Photovoltaic plant as in claim 9, **characterized in that** said metal tubes (35) have a circular cross section and are accommodated in a structure (36), made of aluminum or stainless steel, which determines heat conduction with the external surface of the corresponding metal tube (35) through a heat conductive epoxy resin located in the interstices:

13. Photovoltaic plant as in claim 8, **characterized in that** said heat exchanger (15) is made entirely of molded polymer material, made conductive, in which pipes (40) are made, in which the thermovector fluid is able to flow.

14. Photovoltaic plant as in claim 8, **characterized in that** the lower part of said heat exchanger (15) is made of molded polymer material, made conductive, in which pipes (40) are made, in which the thermovector fluid is able to flow, and the upper part is made of a metal sheet (41) glued to said lower part.

15. Photovoltaic plant as in claim 13 or 14, **characterized in that** said polymer material is made conductive with graphite, carbon fibers, TiO₂, Al₂O₃, SiC.

16. Photovoltaic plant as in claim 14, **characterized in that** said metal sheet (41) is made of aluminum or stainless steel.

17. Photovoltaic plant as in any claim from 8 to 16, **characterized in that** said heat exchanger (15) comprises an inlet pipe (20) through which a thermovector fluid is introduced, and an exit pipe (21) through which said thermovector fluid exits after having effected a heat exchange with said photovoltaic means (11).

## Patentansprüche

1. Fotovoltaikanlage, enthaltend eine Fotovoltaikeinrichtung (11), die Sonnenstrahlen ausgesetzt werden kann, um die relative Sonnenstrahlungsenergie zu empfangen und wenigstens einen Teil der Strahlungsenergie in elektrische Energie umzuwandeln, und eine Einrichtung zur Rückgewinnung der Wärmeenergie (15), die mit der Fotovoltaikeinrichtung (11) in Verbindung steht, um wenigstens einen Teil der Strahlungsenergie zurückzugewinnen, die nicht in elektrische Energie durch die Fotovoltaikeinrichtung (11) umgewandelt wird, wobei eine Schnittstelleneinrichtung zwischen der Fotovoltaikeinrichtung (11) und der Wärmeenergie-Rückgewinnungseinrichtung (15) angeordnet ist, um die Wärmeleitung zwischen der Fotovoltaikeinrichtung (11) und der Wärmeenergie-Rückgewinnungseinrichtung (15) zu optimieren, und die Schnittstelleneinrichtung wenigstens eine erste Schicht (19) eines Wärmeleitmaterials enthält, das **dadurch gekennzeichnet ist, dass** es eine chemische Zusammensetzung auf Acrylbasis hat.

2. Fotovoltaikanlage nach Anspruch 1, **dadurch gekennzeichnet, dass** das Wärmeleitmaterial doppelt haftend ist.

3. Fotovoltaikanlage nach Anspruch 1 oder 2, **dadurch gekennzeichnet, dass** das Wärmeleitmaterial eine Dicke zwischen etwa 150 µm und etwa 300 µm hat.

4. Fotovoltaikanlage nach einem der vorangehenden Ansprüche, **dadurch gekennzeichnet, dass** das Wärmeleitmaterial mit TiO₂, Graphit, SiC und Al₂O₃ aufgeladen ist, um gute Wärmeleiteigenschaften aufzuweisen.

5. Fotovoltaikanlage nach einem der vorangehenden Ansprüche, **dadurch gekennzeichnet, dass** die Fotovoltaikeinrichtung eine Vielzahl von Fotovoltaikzellen (13) enthält, die auf einem Paneel (11) angeordnet sind, das eine Schicht hat, die aus Solarglas (14) mit einer Außenoberfläche (12) besteht, die den Sonnenstrahlen ausgesetzt werden kann.

6. Fotovoltaikanlage nach Anspruch 5, **dadurch gekennzeichnet, dass** zwischen dem Solarglas (14) und den Fotovoltaikzellen (13) eine zweite Schicht (25) aus Ethylvinylacetat (EVA) angeordnet ist, und **dadurch**, dass auf der Innenoberfläche der Fotovoltaikzellen (13) eine dritte Schicht (26) aus Ethylvinylacetat (EVA) angeordnet ist.

7. Fotovoltaikanlage nach Anspruch 6, **dadurch gekennzeichnet, dass** eine vierte Schicht (27), die aus einem Film auf Polyvinylfluoridbasis besteht, auf der dritten Schicht (26) angeordnet ist.

8. Fotovoltaikanlage nach einem der vorangehenden Ansprüche, **dadurch gekennzeichnet, dass** die Wärmeenergie-Rückgewinnungseinrichtung einen Wärmetauscher (15) enthält, der benachbart der Fotovoltaikeinrichtung (11) angeordnet ist.

9. Fotovoltaikanlage nach Anspruch 8, **dadurch gekennzeichnet, dass** der Wärmetauscher (15) eine Vielzahl von Metallröhren (30, 35) enthält, die an dem Metallblech, das aus Aluminium oder Edelstrahl (41) besteht, mit Hilfe eines wärmeleitfähigen Epoxidharzes (31) haften, und in denen ein Thermovektorfluid fließen kann.

10. Fotovoltaikanlage nach Anspruch 9, **dadurch gekennzeichnet, dass** die Metallröhren (30, 35) aus Kupfer oder Edelstahl bestehen.

11. Fotovoltaikanlage nach Anspruch 9 oder 10, **dadurch gekennzeichnet, dass** die Metallröhren (30) einen ovalen Querschnitt haben.

12. Fotovoltaikanlage nach Anspruch 9, **dadurch gekennzeichnet, dass** die Metallröhren (35) einen kreisförmigen Querschnitt haben und in einer Struktur (36) aufgenommen sind, die aus Aluminium oder Edelstahl besteht und die Wärmeleitfähigkeit mit der Außenoberfläche der entsprechenden Metallröhren (35) durch ein wärmeleitfähiges Epoxidharz bestimmt, das sich in den Zwischenräumen befindet.

13. Fotovoltaikanlage nach Anspruch 8, **dadurch gekennzeichnet, dass** der Wärmetauscher (15) vollständig aus einem geformten Polymermaterial besteht, das leitfähig gemacht ist und in dem Röhren (40) ausgebildet sind, in denen das Thermovektorfluid fließen kann.

14. Fotovoltaikanlage nach Anspruch 8, **dadurch gekennzeichnet, dass** der untere Teil des Wärmetauschers (15) aus einem geformten Polymermaterial besteht, das leitend gemacht ist und in dem Röhren (40) ausgebildet sind, in denen das Thermovektorfluid fließen kann, und der obere Teil aus einem Metallblech (41) besteht, dass an den unteren Teil geklebt ist.

15. Fotovoltaikanlage nach Anspruch 13 oder 14, **dadurch gekennzeichnet, dass** das Polymermaterial mit Graphit, Kohlefasern, TiO₂, Al₂O₃, SiC leitfähig gemacht ist.

16. Fotovoltaikanlage nach Anspruch 14, **dadurch gekennzeichnet, dass** das Metallblech (41) aus Aluminium oder Edelstahl besteht.

17. Fotovoltaikanlage nach einem der Ansprüche 8 bis 16, **dadurch gekennzeichnet, dass** der Wärmetauscher (15) eine Einlassröhre (20), durch die das Thermovektorfluid eingeleitet wird, und eine Auslassröhre (21) enthält, durch die das Thermovektorfluid austritt, nachdem es einen Wärmetausch mit der Fotovoltaikeinrichtung (11) bewirkt hat.

## Revendications

1. Installation photovoltaïque comprenant un moyen photovoltaïque (11) pouvant être exposé aux rayons solaires afin de recevoir l'énergie de rayonnement solaire correspondante et convertir une partie au moins de ladite énergie de rayonnement en énergie électrique, et un moyen permettant de récupérer l'énergie thermique (15) associée audit moyen photovoltaïque (11) afin de récupérer une partie au moins de ladite énergie de rayonnement non convertie en énergie électrique par ledit moyen photovoltaïque (11), installation dans laquelle un moyen d'interfaçage est intercalé entre ledit moyen photovoltaïque (11) et ledit moyen de récupération d'énergie thermique (15) afin d'optimiser la conduction de chaleur entre ledit moyen photovoltaïque (11) et ledit moyen de récupération d'énergie thermique (15), et dans laquelle ledit moyen d'interfaçage comprend au moins une première couche (19) de matériau conducteur de chaleur **caractérisé par** une composition chimique à base acrylique.

2. Installation photovoltaïque selon la revendication 1, **caractérisée en ce que** ledit matériau conducteur de chaleur est bi-adhésif.

3. Installation photovoltaïque selon la revendication 1 ou 2, **caractérisée en ce que** ledit matériau conducteur de chaleur possède une épaisseur comprise entre 150 microns environ et 300 microns environ.

4. Installation photovoltaïque selon l'une quelconque des revendications précédentes, **caractérisée en ce que** ledit matériau conducteur de chaleur est chargé en TiO₂, graphite, SiC et Al₂O₃ afin d'avoir de bonnes propriétés de conduction de chaleur.

5. Installation photovoltaïque selon l'une quelconque des revendications précédentes, **caractérisée en ce que** ledit moyen photovoltaïque comprend une pluralité de cellules photovoltaïques (13) assemblées sur un panneau (11) possédant une couche en verre solaire (14) dotée d'une face externe (12) pouvant être exposée aux rayons du soleil.

6. Installation photovoltaïque selon la revendication 5, **caractérisée en ce qu'**entre ledit verre solaire (14) et lesdites cellules photovoltaïques (13) est placée une seconde couche (25) d'éthylène-acétate de vinyle (EVA), et **en ce qu'**une troisième couche (26) d'éthylène-acétate de vinyle (EVA) est placée sur la face interne desdites cellules photovoltaïques.

7. Installation photovoltaïque selon la revendication 6, **caractérisée en ce qu'**une quatrième couche (27) constituée d'un film à base de fluorure de polyvinyle est placée sur ladite troisième couche (26).

8. Installation photovoltaïque selon l'une quelconque des revendications précédentes, **caractérisée en ce que** ledit moyen récupérateur d'énergie thermique comprend un échangeur de chaleur (15) placé à côté dudit moyen photovoltaïque (11).

9. Installation photovoltaïque selon la revendication 8, **caractérisée en ce que** ledit échangeur de chaleur (15) comprend une pluralité de tubes métalliques (30, 35) qui adhèrent à la tôle métallique, constituée d'aluminium ou d'acier inoxydable (41), au moyen d'un résine époxy conductrice de chaleur (31), et dans lesquelles peut circuler un fluide thermovecteur.

10. Installation photovoltaïque selon la revendication 9, **caractérisée en ce que** lesdits tubes métalliques (30, 35) sont en cuivre ou en acier inoxydable.

11. Installation photovoltaïque selon la revendication 9 ou 10, **caractérisée en ce que** lesdits tubes métalliques (30) sont de section transversale ovale.

12. Installation photovoltaïque selon la revendication 9, **caractérisée en ce que** lesdits tubes métalliques (35) sont de section transversale circulaire et sont logés dans une structure (36) en aluminium ou en acier inoxydable qui détermine la conduction de chaleur avec la face externe du tube métallique correspondant (35), par l'intermédiaire d'une résine époxy conductrice de chaleur située dans les interstices.

13. Installation photovoltaïque selon la revendication 8, **caractérisée en ce que** ledit échangeur de chaleur (15) est entièrement constitué de matériau polymère moulé et rendu conducteur, dans lequel sont ménagés des tuyaux (40) à l'intérieur desquels peut circuler le fluide thermovecteur.

14. Installation photovoltaïque selon la revendication 8, **caractérisée en ce que** la partie basse dudit échangeur de chaleur (15) est constituée de matériau polymère moulé et rendu conducteur, dans lequel sont ménagés des tuyaux (40) à l'intérieur desquels peut circuler le fluide thermovecteur, et la partie haute est constituée d'une tôle métallique (41) collée à ladite partie basse.

15. Installation photovoltaïque selon la revendication 13 ou 14, **caractérisée en ce que** ledit matériau polymère est rendu conducteur à l'aide de graphite, fibres de carbone, TiO₂, Al₂O₃, SiC.

16. Installation photovoltaïque selon la revendication 14, **caractérisée en ce que** ladite tôle métallique (41) est en aluminium ou en acier inoxydable.

17. Installation photovoltaïque selon l'une quelconque des revendications 8 à 16, **caractérisée en ce que** ledit échangeur de chaleur (15) comprend un tuyau d'entrée (20) par lequel est introduit un fluide thermovecteur, et un tuyau de sortie (21) par lequel sort ledit fluide thermovecteur après avoir effectué un échange de chaleur avec ledit moyen photovoltaïque (11).
